# EUROPÄISCHE PATENTSCHRIFT

(11) **EP 3 684 652 B1**
(45) Veröffentlichungstag und Bekanntmachung des Hinweises auf die Patenterteilung: **09.11.2022**
(21) Anmeldenummer: 18778854.2
(22) Anmeldetag: 19.09.2018
(51) Int. Cl.: B60R 21/205, B60R 21/2334, B60R 21/239

(54) **FRONT-RÜCKHALTEVORRICHTUNG**
FRONT RESTRAINT DEVICE
SYSTÈME DE RETENUE AVANT

(30) Priorität: 19.09.2017 DE 202017105668 U
(43) Veröffentlichungstag der Anmeldung: 29.07.2020
(73) Patentinhaber: Dalphi Metal España, S.A., 36213 Vigo (ES); ZF Passive Safety Systems US Inc., Washington, MI 48094 (US)
(72) Erfinder: RAMOS, Ramón, 47150 Viana de Cega (Valladolid) (ES); CALZADA ADEVA, Michel, 47195 Arroyo de la Encomienda (Valladolid) (ES); FISCHER, Kurt F., Rochester MI 48307 (US); GOULD, Douglas M., Lake Orion MI 48359 (US); BALSIS, Robert, Imlay City MI 48444 (US); ACKER, Dominique, 74417 Gschwend (DE)
(74) Vertreter: ZF Patentabteilung - DIPS
(86) Internationale Anmeldenummer: PCT/EP2018/075313
(87) Internationale Veröffentlichungsnummer: WO 2019/057749

(56) Entgegenhaltungen:
- WO-A1-2015/175187
- WO-A1-2016/077707
- US-A1- 2011 057 427
- US-A1- 2014 125 039
- US-A1- 2017 247 013

## Beschreibung

Die Erfindung betrifft eine Front-Rückhaltevorrichtung zum Schutz eines auf einem Fahrzeugsitz sitzenden Fahrzeuginsassen in einem Kraftfahrzeug.

Aus dem Stand der Technik sind Front-Rückhaltevorrichtungen bekannt, die auch als Fahrer- bzw. Beifahrer-Airbag bezeichnet werden. Die Rückhaltevorrichtungen weisen üblicherweise einen Gassack sowie einen dazugehörigen Gasgenerator auf, über den ein Aufblasgas bereitgestellt wird, mit dem der Gassack in einem Auslösefall aufgeblasen wird, um den Fahrzeuginsassen zu schützen.

Es ist aus dem Stand der Technik ferner bekannt, dass der Gassack unterschiedlich aufgeblasen werden soll, sofern es sich bei dem Fahrzeuginsassen um einen schweren oder leichten bzw. einen großen oder kleinen Fahrzeuginsassen handelt. Hierdurch wird erreicht, dass der Gassack bei einem leichteren Fahrzeuginsassen weniger stark aufgeblasen wird als bei einem schwereren Fahrzeuginsassen, sodass der leichtere Fahrzeuginsasse im Auslösefall mit einem weniger hart aufgeblasenen Gassack aufgefangen wird. Der auftretende Impuls bei einem leichten Fahrzeuginsassen ist geringer als bei einem schweren Fahrzeuginsassen.

Üblicherweise wird hierzu das Gewicht bzw. die Größe über Sensoren erkannt, beispielsweise die Sitzposition des Fahrzeuginsassen oder das auf dem Fahrzeugsitz wirkende Gewicht. Der Gasgenerator wird ausgehend von der erfassten Sitzposition bzw. dem erfassten Gewicht unterschiedlich angesteuert, wodurch die in den Gassack einströmende Gasmenge entsprechend reguliert wird.

Hierzu sind jedoch Sensoren, teure Gasgeneratoren sowie eine aufwendige Ansteuerung notwendig, die insgesamt eine teure Rückhaltevorrichtung zur Folge haben.

Weiterhin ist aus der EP 1 568 544 B1 eine Seitenaufprall-Rückhaltevorrichtung mit Abströmöffnungen bekannt, über die in einer Rückhaltesituation der Gassackinnendruck in Abhängigkeit der Größe des Fahrzeuginsassen passiv steuerbar ist. Der Abströmöffnung kann zum Schutz des Fahrzeuginsassen eine Ablenkeinrichtung zugeordnet sein, durch die das Gas von dem Fahrzeuginsassen weg weisend austritt. US2011057427 A1 offenbart eine Frontgassack mit einer Abströmöffnung und eine zugehörigen Kanal im oberen Drittel-Bereich des Gassacks, keine Abströmöffnung im mittleren-Drittelbereich des Gassacks und eine Abströmöffnung mit zugehörigen Kanal im unteren Drittel-Bereich des Gassacks.

Die Aufgabe ist es, eine kostengünstige und effektive Front-Rückhaltevorrichtung bereitzustellen, mit der ein Fahrzeuginsasse in Abhängigkeit von seiner Größe bzw. seines Gewichts optimal geschützt wird.

Die Aufgabe wird erfindungsgemäß durch eine Front-Rückhaltevorrichtung mit den Merkmalen des Anspruchs 1 gelöst.

Der Grundgedanke der Erfindung ist es, ein adaptives Ventil vorzusehen, dessen Zustand sich an den Fahrzeuginsassen anpasst. Das bedeutet, dass der Fahrzeuginsasse aufgrund seiner Konstitution, insbesondere seiner Größe, das Ventil im Auslösefall sperrt, sofern der Fahrzeuginsasse eine entsprechende Größe hat. Hierdurch ist sichergestellt, dass über das adaptive Ventil bei einem großen Fahrzeuginsassen kein Aufblasgas mehr ausströmt, wenn der Kopf des Fahrzeuginsassen vom aufgeblasenen Gassack gehalten ist. Dementsprechend ist der Gassack entsprechend härter bzw. voluminöse als bei einem kleineren Fahrzeuginsassen, der das adaptive Ventil aufgrund seiner Körpergröße nicht schließt.

Eine erfindungsgemäße Front-Rückhaltevorrichtung dient dem Schutz eines auf einem Fahrzeugsitz sitzenden Fahrzeuginsassen in einem Kraftfahrzeug, mit einem Gassack, der sich zwischen dem Fahrzeuginsassen und einem vorderen Fahrzeugbereich entfaltet, insbesondere einer Fahrzeugarmatur und/oder der Frontscheibe. Der Gassack weist mehrere Abströmöffnungen auf, die insbesondere mit einer Hauptkammer des Gassacks strömungsverbunden sein können, über die Aufblasgas aus dem Gassack strömen kann. Den Abströmöffnungen ist ein adaptives Ventil zugeordnet, das in einem dem Fahrzeuginsassen zugewandten Bereich des Gassacks, insbesondere einer dem Fahrzeuginsassen zugewandten Gassackfrontwand des Gassacks, angeordnet ist. Die Positionierung des Ventils ist in Bezug auf den Gassack so gewählt ist, dass das Ventil im Auslösefall abhängig von der Größe des Fahrzeuginsassen und einem Lastfall vom Kopf und/oder dem Oberkörper des Fahrzeuginsassen geschlossen werden kann.

Durch verschiedene Lastfälle können dabei insbesondere verschiedene Rückhaltebereiche in einem dem Fahrzeuginsassen zugewandten Bereich des Gassacks beschreiben werden, in die der Fahrzeuginsasse in einer Rückhaltesituation mit dem Kopf und/oder dem Oberkörper fallen kann. Zudem kann vorgesehen sein, dass auch die Unterteilung bezüglich der Größe des Fahrzeuginsassen feiner als die zuvor beschriebene Unterteilung in große und kleine Fahrzeuginsassen erfolgt.

Erfindungsgemäß weist der Gassack mehrere Abströmöffnungen auf, wobei jeder der Abströmöffnungen ein adaptives Ventil zugeordnet ist, das insbesondere in einem dem Fahrzeuginsassen zugewandten Bereich des Gassacks angeordnet ist. Die Position der Ventile ist dabei so gewählt, dass durch den Kopf und/oder den Oberkörper des Fahrzeuginsassen abhängig von der Größe des Fahrzeuginsassen und dem vorliegenden Lastfall kein Ventil oder ein Ventil oder eine Teilmenge der Ventile oder alle Ventile geschlossen werden können. Durch die Teilmenge wird insbesondere eine ganze Teilmenge der Ventile beschreiben, sodass beispielsweise zwei von drei Ventilen durch den Kopf und/oder den Oberkörper des Fahrzeuginsassen geschlossen werden.

Durch eine derartige Ausführungsform mit mehreren Abströmöffnungen und zugeordneten Ventilen kann neben den verschiedenen Lastfällen insbesondere auch eine feinere Unterteilung bezüglich der Größe der Fahrzeuginsassen erfolgen. Somit kann auf einfache Weise eine hohe und kostengünstige Adaptivität der Front-Rückhaltevorrichtung erzielt werden.

Insbesondere ist über die zumindest eine Abströmöffnung durch das Abströmen von Aufblasgas der Gassackinnendruck des Gassacks in Abhängigkeit von der Größe des Fahrzeuginsassen und des Lastfalls steuerbar.

Weiterhin kann der Gassack eine weitere Abströmöffnung aufweisen. Der weiteren Abströmöffnung ist vorzugsweise kein Ventil zugeordnet, sodass über diese weitere Abströmöffnung eingestellt werden kann, dass der Gassackinnendruck abnimmt, nachdem der Fahrzeuginsasse vom Gassack aufgefangen worden ist. Die weitere Abströmöffnung kann in einem dem Fahrzeuginsassen nicht zugewandten Bereich, beispielsweise des unteren Abschnitts des Gassacks, angeordnet sein. Alternativ kann die weitere Abströmöffnung in einem dem Fahrzeuginsassen zugewandten Bereich des Gassacks, beispielsweise der Gassackfrontwand, angeordnet sein.

Vorzugsweise ist an der Abströmöffnung eine Ablenkeinrichtung für das abströmende Aufblasgas vorgesehen. Die Ablenkeinrichtung kann zumindest ein auf der Außenseite des Gassacks über der Abströmöffnung angeordnetes Gewebestück umfassen. Alternativ kann die Ablenkeinrichtung einstückig mit dem, dem Fahrzeuginsassen zugewandten Bereich des Gassacks ausgebildet sein.

Die Ablenkeinrichtung kann als ein Kanal ausgebildet sein. Insbesondere ist vorgesehen, dass der Kanal jeweils das einer Abströmöffnung zugeordnete adaptive Ventil ausbildet. Der Kanal kann außenseitig an der Gassackfrontwand befestigt sein, beispielsweise als ein aufgenähter Gewebeabschnitt. Dabei kann der Kanal insbesondere im Querschnitt abschnittsweise durch die Gassackfrontwand und abschnittsweise durch den Gewebeabschnitt gebildet sein. Alternativ kann der Kanal einstückig mit der Gassackfrontwand ausgebildet sein, beispielsweise durch ein geeignetes Webverfahren, bei dem der Kanal insbesondere in das Gassackelement eingewebt wird, das die Gassackfrontwand bildet.

Der Kanal kann von der Abströmöffnung zu dem Kanalauslass an der Gassackfrontwand in einer Kurvenbahn verlaufen. Alternativ kann der Kanal an der Gassackfrontwand im Wesentlichen in horizontaler Richtung in Bezug auf den aufgeblasenen Gassack verlaufen, wobei hierdurch insbesondere Neigungen des Kanals von ±10° gegenüber der Horizontalen miteingeschlossen sind. Der Kanal beziehungsweise die Kanäle sind dabei vorzugsweise im Bereich der oberen zwei Drittel des aufgeblasenen Gassacks angeordnet, insbesondere im Bereich der oberen zwei Drittel des dem Fahrzeuginsassen zugewandten Bereichs des Gassacks.

In einer weiteren Ausführungsform kann vorgesehen sein, dass der Abströmöffnung ein mehrstufiges Ventil zugeordnet ist. Vorzugsweise werden die einzelnen Stufen des Ventils durch den Kanal gebildet, der sich in mehrere Teilkanäle aufteilt, die abhängig von der Größe des Fahrzeuginsassen und dem Lastfall vom Kopf und/oder dem Oberkörper des Fahrzeuginsassen geschlossen werden können.

Vorteilhafte Ausgestaltungen der erfindungsgemäßen Front-Rückhaltevorrichtung gehen aus den abhängigen Ansprüchen hervor.

Weitere Eigenschaften und Vorteile der Erfindung ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Front-Rückhaltevorrichtung,
- Figur 2 eine schematische Darstellung der erfindungsgemäßen Front-Rückhaltevorrichtung aus Figur 1 aus Sicht des Fahrzeuginsassen;
- Figur 3 a) und b) eine schematische Schnittansicht auf einen Teilausschnitt der Front-Rückhaltevorrichtung gemäß der Linie III-III in Figur 2;
- Figur 4 eine schematische Darstellung auf einen dem Fahrzeuginsassen zugewandten Bereich einer Front-Rückhaltevorrichtung mit verschieden großen Fahrzeuginsassen und verschiedenen Lastfällen;
- Figur 5 eine schematische Darstellung möglicher daraus resultierender Rückhaltevarianten bezogen auf die jeweiligen Fahrzeuginsassen;
- Figur 6 eine schematische Darstellung einer auf die Rückhaltevarianten nach Figur 5 angepassten erfindungsgemäßen Front-Rückhaltevorrichtung;
- Figur 7 die Front-Rückhaltevorrichtung nach Figur 6 in einer ersten Rückhaltevariante;
- Figur 8 die Front-Rückhaltevorrichtung nach Figur 6 in einer zweiten Rückhaltevariante;
- Figur 9 die Front-Rückhaltevorrichtung nach Figur 6 in einer dritten Rückhaltevariante; und
- Figur 10 die Front-Rückhaltevorrichtung nach Figur 6 in einer vierten Rückhaltevariante.

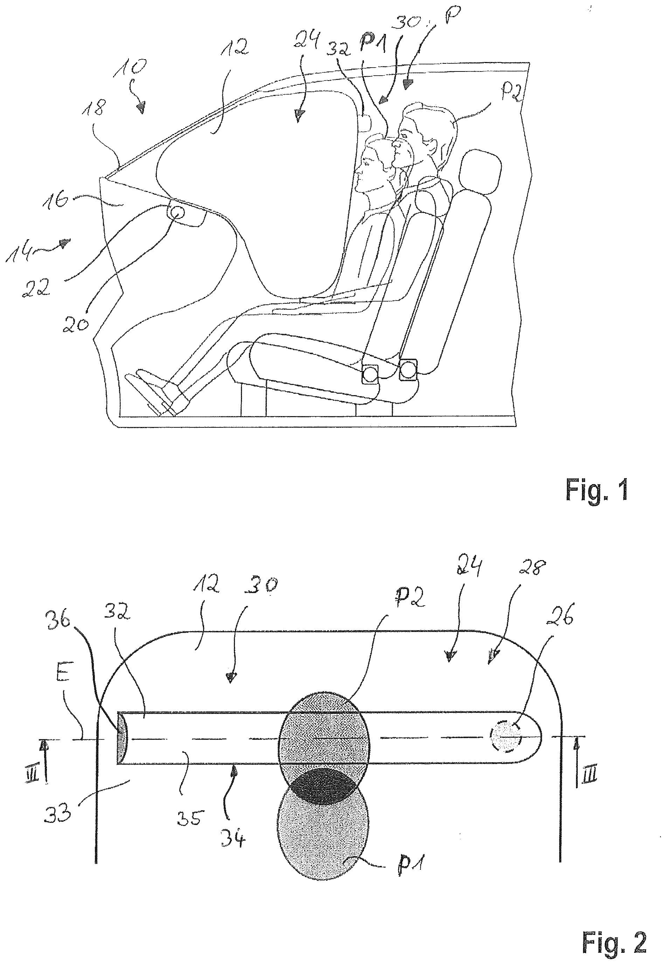

In Figur 1 ist eine Front-Rückhaltevorrichtung 10 für ein Kraftfahrzeug gezeigt, die zum Schutz eines Fahrzeuginsassen P in einem Kraftfahrzeug dient. In der gezeigten Ausführungsform dient die Front-Rückhaltevorrichtung 10 zum Schutz eines auf einem Beifahrersitz sitzenden Fahrzeuginsassen P.

Die Front-Rückhaltevorrichtung 10 umfasst einen Gassack 12, der in seinem aufgeblasenen Zustand gezeigt ist.

Ferner sind in der Figur 1 zwei unterschiedlich große Fahrzeuginsassen P1, P2 dargestellt, die aufgrund ihrer Größe anders in den aufgeblasenen Gassack 12 fallen. Dies geht auch aus der Figur 2 hervor, in der der aufgeblasene Gassack 12 aus Sicht des Fahrzeuginsassen P teilweise dargestellt ist, wobei die Köpfe der beiden Fahrzeuginsassen P1, P2 dargestellt sind, um zu verdeutlichen, dass die unterschiedlich großen Fahrzeuginsassen P1, P2, insbesondere deren Köpfe, anders in den aufgeblasenen Gassack 12 fallen.

Wie aus der Figur 1 ersichtlich ist, ist der aufgeblasene Gassack 12 zwischen einem vorderen Fahrzeugbereich 14 und dem Fahrzeuginsassen P vorgesehen. Dies bedeutet, dass sich der Gassack 12 zwischen dem Fahrzeuginsassen P und dem vorderen Fahrzeugbereich 14 entfaltet, insbesondere einer Fahrzeugarmatur 16 und einer Frontscheibe 18.

Des Weiteren ist in Figur 1 gezeigt, dass die Front-Rückhaltevorrichtung 10 einen Gasgenerator 20 aufweist, der in der Fahrzeugarmatur 16 in einem Gassackmodul 22 angeordnet ist, in dem auch der gefaltete Gassack 12 in seinem Ausgangszustand aufgenommen ist. Der Gasgenerator 20 steht mit dem Gassack 12 in Strömungsverbindung, sodass das über den Gasgenerator 20 erzeugte Aufblasgas den Gassack 12 entfaltet bzw. aufbläst.

Der Gassack 12 weist ferner zumindest eine Hauptkammer 24 auf, die vom Aufblasgas vorwiegend aufgeblasen wird, da die Hauptkammer 24 das Volumen des Gassacks 12 bestimmt. Daneben kann der Gassack 12 weitere Kammern aufweisen, insbesondere Nebenkammern, die üblicherweise zur Formgebung des aufgeblasenen Gassacks 12 dienen, beispielsweise seitliche Führungskissen oder ähnliches.

Aus der Figur 2 geht insbesondere hervor, dass der Gassack 12 eine Abströmöffnung 26 aufweist, über die Aufblasgas aus dem Gassack 12 ausströmen kann, wodurch das Volumen des Gassacks 12 verändert werden kann. Die Abströmöffnung 26 ist vorzugsweise mit der Hauptkammer 24 des Gassacks 12 strömungsverbunden, sodass das Aufblasgas, welches die Hauptkammer 24 füllt, über die Abströmöffnung 26 ausströmen kann, da die Hauptkammer 24 üblicherweise zur Ausgestaltung des Volumens des Gassacks 12 dient.

Der in der dem Insassen zugewandten Frontwand vorhandenen Abströmöffnung 26 ist ein adaptives Ventil 28 zugeordnet, das in einem dem Fahrzeuginsassen P zugewandten Bereich 30 des Gassacks 12 vorgesehen ist, also in einem Bereich des Gassacks 12, mit dem der Fahrzeuginsasse P im Auslösefall in Kontakt kommen könnte.

Das adaptive Ventil 28 ist dabei in Bezug auf den Gassack 12 so an einer vertikalen Position angeordnet, dass das Ventil 28 im Auslösefall vom Kopf eines kleinen Fahrzeuginsassen P1 nicht geschlossen wird, aber von einem großen Fahrzeuginsassen P2 geschlossen wird.

Demnach ist das Ventil 28 adaptiv ausgebildet, sodass sich der Gassack 12 in Abhängigkeit von der Größe des Fahrzeuginsassen P aufbläst bzw. Aufblasgas aus dem Gassack 12 in Abhängigkeit von der Größe des Fahrzeuginsassen P entweicht. Bei einem kleinen Fahrzeuginsassen P1 kann das Aufblasgas über die Abströmöffnung 26 und das geöffnete Ventil 28 ausströmen, wohingegen der große Fahrzeuginsasse P2 das Ventil 28 schließt, wodurch kein Aufblasgas über die Abströmöffnung 26 ausströmen kann.

Wie aus den Figuren 1 und 2 hervorgeht, umfasst der Gassack 12 einen Kanal 32, der durch eine Gewebelage an der Außenseite des Gassacks 12 gebildet ist. Der Kanal 32 ist in dem dem Fahrzeuginsassen P zugewandten Bereich 30 vorgesehen, wobei er in einem oberen Drittel des aufgeblasenen Gassacks 12 angeordnet ist. Zudem verläuft der Kanal 32 im Wesentlichen in horizontaler Richtung in Bezug auf den aufgeblasenen Gassack 12 und erstreckt sich dabei über wenigstens 70 % der Breite des aufgeblasenen Gassacks 12, insbesondere über wenigstens 90 % der Breite.

Der Kanal 32 ist an einer Gassackfrontwand 33 außenseitig befestigt und wird durch einen aufgenähten Gewebeabschnitt 35 gebildet. Der Kanal 32 wird im Querschnitt abschnittsweise durch die Gassackfrontwand 33 und abschnittsweise durch den Gewebeabschnitt 35 definiert.

Der Kanal 32 steht mit der Abströmöffnung 26 in Strömungsverbindung, sodass das über die Abströmöffnung 26 strömende Aufblasgas durch den Kanal 32 geleitet wird. Somit stellt der Kanal 32 gleichzeitig eine Ablenkeinrichtung 34 für das ausströmende Aufblasgas dar. Über den Kanal 32 wird das ausströmende Aufblasgas in einen vorgesehenen Bereich umgelenkt, wodurch das ausströmende Aufblasgas beispielsweise nicht auf den Fahrzeuginsassen P trifft.

Wie insbesondere aus der Figur 2 zu entnehmen ist, liegt die Abströmöffnung 26 im Wesentlichen auf derselben vertikalen Ebene E wie das Ventil 28 bzw. der Kanal 32. Dementsprechend ist eine einfache Ausgestaltung geschaffen.

Generell bildet der Kanal 32 das adaptive Ventil 28 aus.

Demnach trifft der große Fahrzeuginsasse P2 mit seinem Kopf auf den aus dem Gewebematerial bestehenden Kanal 32, sodass er den flexibel ausgebildeten Kanal 32 eindrückt, wodurch dieser geschlossen ist, was dem geschlossenen Ventil 28 entspricht. Das Aufblasgas kann dann nicht mehr aus dem Gassack 12 ausströmen.

Der Kopf des kleineren Fahrzeuginsassen P1 berührt hingegen nicht den Kanal 32, wodurch dieser auch nicht zusammengedrückt wird. Dementsprechend bleibt das adaptive Ventil 28 geöffnet, sodass das Aufblasgas aus dem Gassack 12 ausströmen kann.

Über die Abströmöffnung 26 ist somit gewährleistet, dass der Gassackinnendruck des Gassacks 12 in Abhängigkeit von der Größe des Fahrzeuginsassen P steuerbar ist. Das adaptive Ventil 28 ist demnach derart eingerichtet, dass es den Gassackinnendruck des Gassacks 12 in Abhängigkeit von der Größe des Fahrzeuginsassen P selbsttätig regelt.

Bei dem Ventil 28 handelt es sich also um ein passives Ventil, das nicht aktiv von einer Fahrzeugsteuerung oder ähnlichem angesteuert wird, um den Gassackinnendruck des Gassacks 12 zu variieren. Vielmehr wird dieser passiv über den Fahrzeuginsassen P selbst geregelt, also adaptiv.

Darüber hinaus kann der Gassack 12 eine weitere Abströmöffnung aufweisen, die beispielsweise in einem dem Fahrzeuginsassen P nicht zugewandten Bereich des unteren Abschnitts des Gassacks 12 angeordnet ist. Über diese weitere Abströmöffnung kann eingestellt werden, dass der Gassackinnendruck abnimmt, nachdem der Fahrzeuginsasse P vom Gassack 12 aufgefangen worden ist.

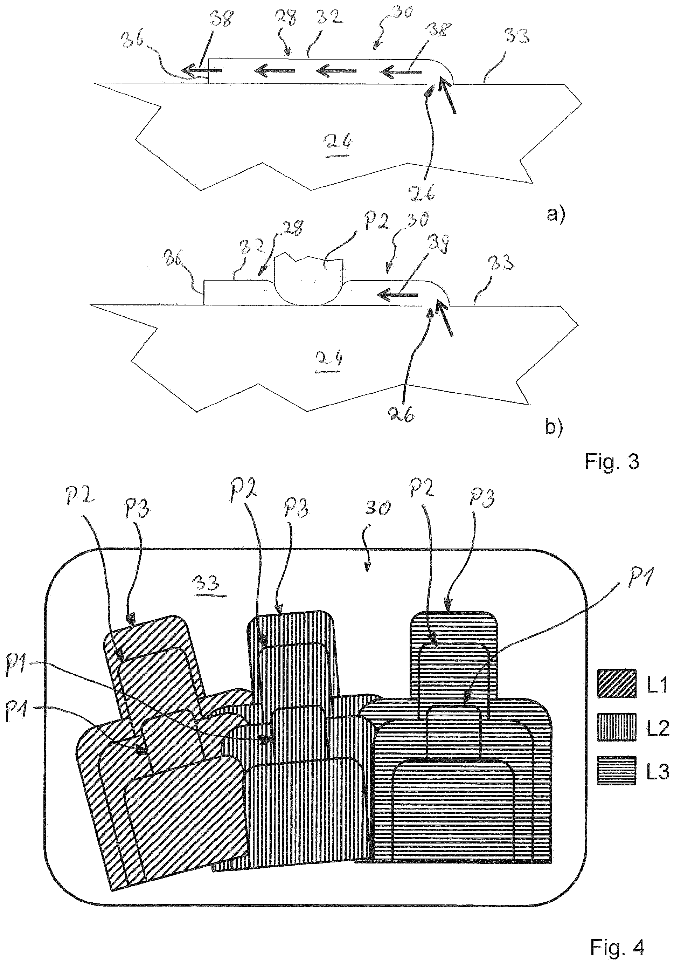

Die Figuren 3 a) und b) zeigen einen Teilausschnitt der Gassackfrontwand 33 der Front-Rückhaltevorrichtung 10 mit dem Ventil 28 in einer Schnittdarstellung.

In Figur 3 a) ist das Ventil 28 in der geöffneten Stellung zu sehen, in der der kleine Fahrzeuginsasse P1 den Kanal 32 nicht verschlossen hat. Das Abluftgas kann daher gemäß den Pfeilen 38 über die Abströmöffnung 26, den Kanal 32 und den Kanalauslass 36 aus dem Gassack 12 ausströmen.

Figur 3 b) zeigt das Ventil 28 in der geschlossenen Stellung, in der der Kanal 32 durch den großen Fahrzeuginsassen P2 verschlossen ist. Das Abluftgas kann daher wie durch die Pfeile 39 angedeutet nicht aus dem Gassack 12 ausströmen.

In den Figuren 4 bis 10 ist die erfindungsgemäße Front-Rückhaltevorrichtung sowie deren Auslegung anhand einer weiteren Ausführungsform beschreiben. Im Folgenden wird daher lediglich auf die Unterschiede eingegangen und gleiche und funktionsgleiche Teile sind mit denselben Bezugszeichen versehen.

Figur 4 zeigt eine Matrix mit möglichen Auftreffbereichen auf die Gassackfrontwand 33 des Gassacks 12 in einer Rückhaltesituation für verschieden große Fahrzeuginsassen P1, P2 und P3 in verschiedenen Lastfällen L1, L2 und L3.

Bei den Fahrzeuginsassen kann es sich bei der Auslegung beispielsweise bei dem Fahrzeuginsassen P1 um eine 5%-Frau, bei dem Fahrzeuginsassen P2 um einen 50%-Mann und bei dem Fahrzeuginsassen P3 um einen 95%-Mann handeln.

Bei den Lastfällen L1, L2 und L3 handelt es sich in der dargestellten Matrix um mögliche Auftreffpunkte der Fahrzeuginsassen P1-P3 auf den dem Fahrzeuginsassen P1-P3 zugewandten Bereich 30 des Gassacks 12 in verschiedenen Rückhaltesituationen. Die Lastfälle L1 (schräge Schraffur) und L3 (horizontale Schraffur) können beispielsweise jeweils bei einem schrägen Frontalaufprall oder einen Frontalaufprall mit niedriger Überdeckung auftreten, in dem auf den Fahrzeuginsasse P1-P3 in der Rückhaltesituation auch eine seitliche Beschleunigung wirkt. Der Lastfall L2 (vertikale Schraffur) kann beispielsweise bei einem Frontalaufprall mit hoher Überdeckung auftreten, in dem auf den Fahrzeuginsasse P1-P3 eine im Wesentlichen nach vorne gerichtete Beschleunigung wirkt.

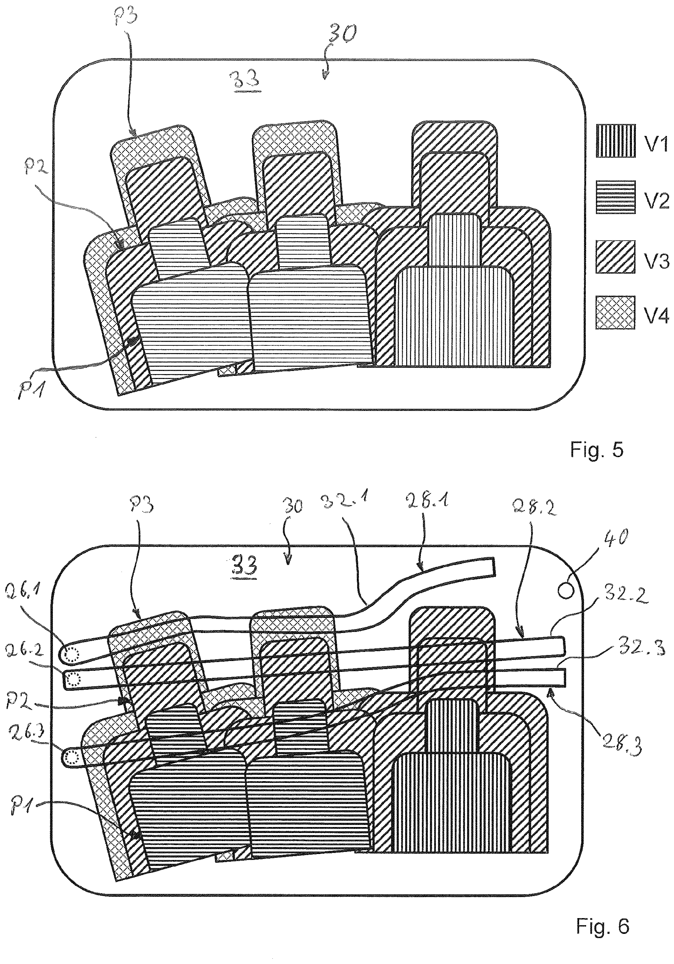

Die Figur 5 zeigt eine aus der Figur 4 resultierende Matrix mit Rückhaltevarianten V1-V4 für die Fahrzeuginsassen P1-P3 in den Lastfällen L1-L3. Durch die Rückhaltevarianten V1-V4 wird beschrieben, wie groß eine Abströmöffnung ausgelegt sein sollte um eine möglichst optimierte Rückhaltung des Fahrzeuginsassen P1-P3 in dem jeweiligen Lastfall L1-L3 zu erhalten.

In der exemplarischen Auslegung für die dargestellte Ausführungsform hat sich beispielsweise ergeben, dass in der Rückhaltevariante V4 für den Fahrzeuginsassen P3 in den Lastfällen L1 und L2 eine Abströmöffnung mit einer Fläche mit einem Durchmesser D1 vorgesehen sein sollte. Für die Rückhaltevariante V3 sollte für den Fahrzeuginsassen P3 im Lastfall L3 und den Fahrzeuginsassen P2 in den Lastfällen L1, L2 und L3 eine Abströmöffnung mit einer Fläche mit einem Durchmesser D2 vorgesehen sein. Weiterhin hat sich für die dargestellte exemplarische Ausführungsform ergeben, dass für die Rückhaltevariante V2 für den Fahrzeuginsassen P1 in den Lastfällen L1 und L2 eine Abströmöffnung mit einer Fläche mit einem Durchmesser D3 vorgesehen sein sollte und für die Rückhaltevariante V1 für den Fahrzeuginsassen P1 in dem Lastfall L3 eine Abströmöffnung mit einer Fläche mit einem Durchmesser D4 um den Gassackinnendruck anzupassen.

Figur 6 zeigt eine daraus resultierende mögliche Ausführungsform des zum Fahrzeuginsassen P1-P3 gerichteten Bereichs 30 des aufgeblasenen Gassacks 12 der erfindungsgemäßen Front-Rückhaltevorrichtung 10.

Die Front-Rückhaltevorrichtung 10 weist in dem zum Fahrzeuginsassen P1-P3 gerichteten Bereich 30 des Gassacks 12 drei Abströmöffnungen 26.1 bis 26.3 auf, denen jeweils ein Ventil 28.1 bis 28.3 zugeordnet ist. Zudem weist die Front-Rückhaltevorrichtung 10 in dem zum Fahrzeuginsassen P1-P3 gerichteten Bereich 30 eine weitere Abströmöffnung 40 auf, der kein Ventil zugeordnet ist.

Die Ventile 28.1 bis 28.3 sind jeweils als ein Kanal 32.1 bis 32.3 ausgebildet. Die die Ventile 28.1 und 28.3 bildenden Kanäle 32.1 und 32.3 verlaufen jeweils von der Abströmöffnung 26.1 bzw. 26.3 zu dem jeweiligen Kanalauslass 36.1 bzw. 36.3 in einer Kurvenbahn, die hier im Wesentlichen eine flache S-Form aufweist. Dadurch kann in der dargestellten Ausführungsform erreicht werden, dass das der Kanal 32.1 bzw. 32.3 abhängig von der Rückhaltevariante durch den Fahrzeuginsassen P3 bzw. P1 verschlossen oder nicht verschlossen wird, wie detaillierter in den weiteren Figuren gezeigt wird. Die Kanäle 32.1 bis 32.3 der Ventile 28.1 bis 28.3 sind in der dargestellten Ausführungsform in den oberen zwei Dritteln des dem Fahrzeuginsassen P1 bis P3 zugewandten Bereich 30 des aufgeblasenen Gassacks 12 angeordnet.

Der Kanal 32.2 verläuft im Wesentlichen entlang einer horizontalen Geraden, wobei der Kanalauslass 36.2 an der Gassackfrontwand 33 des aufgeblasenen Gassacks 12 etwas oberhalb der zugehörigen Abströmöffnung 26.2 angeordnet ist.

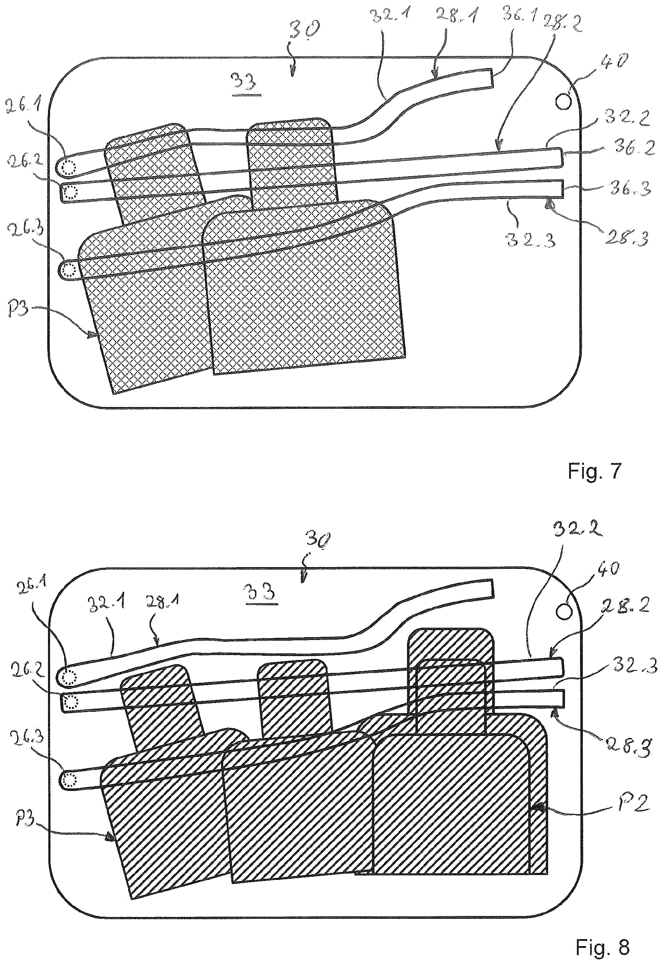

Figur 7 zeigt die Rückhaltevariante V4, in der eine Abströmöffnung mit einer Fläche mit einem Durchmesser D1 benötigt wird. Diese wird in der dargestellten Ausführungsform durch die weitere Abströmöffnung 40 bereitgestellt, die in der dargestellten Ausführungsform in einem dem Fahrzeuginsassen P1 bis P3 zugewandten Bereich 30 des Gassacks 12 angeordnet ist. Die weitere Abströmöffnung 40 kann hier insbesondere dazu vorgesehen sein, dass der Gassackinnendruck abnimmt, nachdem der Fahrzeuginsasse P vom Gassack 12 aufgefangen worden ist.

Der Fahrzeuginsasse P3 trifft der Rückhaltesituation in den Lastfällen L1 und L2 mit seinem Kopf und Oberkörper auf die Kanäle 32.1 bis 32.3 der Ventile 28.1 bis 28.3, wodurch er die flexibel ausgebildeten Kanäle 32.1 bis 32.3 eindrückt und schließt. Dadurch sind die Ventile 28.1 bis 28.3 geschlossen und es kann kein Aufblasgas über die Abströmöffnungen 26.1 bis 26.3 aus dem Gassack 12 ausströmen. Der Gassack 12 weist folglich im entfalteten und aufgeblasenen Zustand im Wesentlichen den für die Ausführungsform maximal vorgesehen Gassackinnendruck auf.

Figur 8 zeigt detaillierter die Rückhaltevariante V3, in der eine Abströmöffnung mit einer Fläche mit einem Durchmesser D2 benötigt wird. Die hierfür benötigte Fläche der Abströmöffnungen wird in der dargestellten Ausführungsform durch die weitere Abströmöffnung 40 sowie die Abströmöffnung 26.1 bereitgestellt.

Durch den Kurvenverlauf des Kanals 32.1 des Ventils 28.1 kann erreicht werden, dass der Kanal 32.1 durch den Fahrzeuginsassen P3 im Lastfall L3 sowie den Fahrzeuginsassen P2 in den Lastfällen L1 bis L3 nicht verschlossen wird und das Ventil 28.1 geöffnet ist. Dadurch kann zusätzlich zur weiteren Abströmöffnung 40 über die Abströmöffnung 26.1 Abluftgas aus dem Gassack 12 ausströmen, Die Ventile 28.2 und 28.3 werden hingegen durch den Fahrzeuginsassen P3 im Lastfall L3 sowie den Fahrzeuginsassen P2 in den Lastfällen L1 bis L3 verschlossen, sodass über die Abströmöffnungen 26.2 und 26.3 kein Abluftgas aus dem Gassack 12 ausströmen kann. Durch das Schließen einer Teilmenge der Ventile 28 kann der Gassackinnendruck im Vergleich zu der Rückhaltevariante V4 gesenkt werden, wobei gleichzeitig noch ein ausreichend großer Gassackinnendruck für den Fahrzeuginsassen P3 im Lastfall L3 sowie den Fahrzeuginsassen P2 in den Lastfällen L1 bis L3 bereitgestellt werden kann.

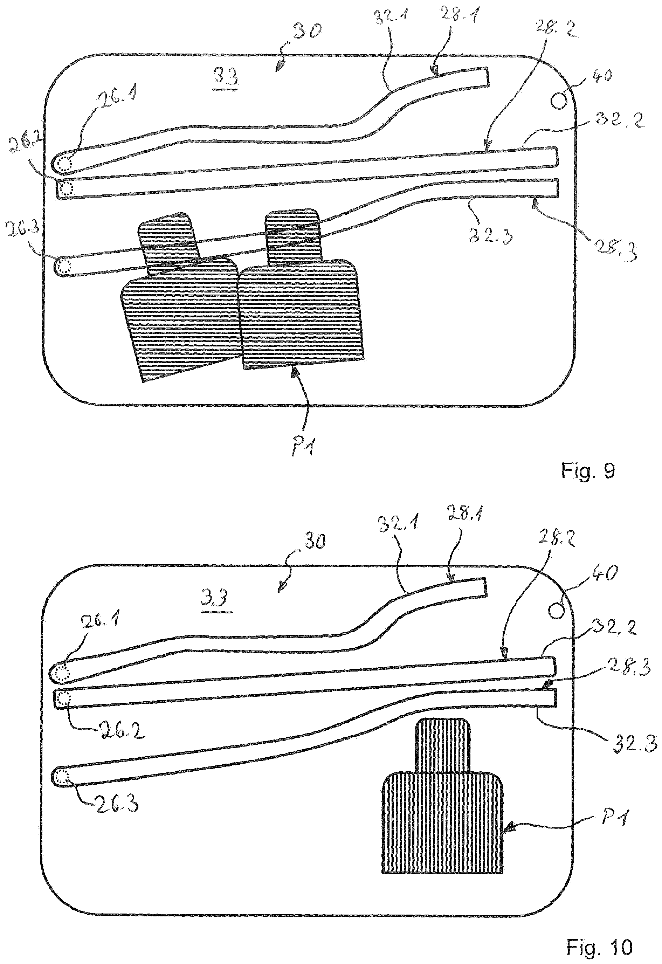

Figur 9 zeigt die Rückhaltevariante V2, in der eine Abströmöffnung mit einer Fläche mit einem Durchmesser D3 benötigt wird. Die hierfür benötigte Fläche der Abströmöffnungen wird in der dargestellten Ausführungsform durch die weitere Abströmöffnung 40 sowie die Abströmöffnungen 26.1 und 26.2 bereitgestellt.

Durch den Verlauf der Kanäle 32.1 und 32.2 der Ventils 28.1 und 28.2 wird erreicht, dass die Kanäle 32.1 und 32.2 durch den Fahrzeuginsassen P1 in den Lastfällen L1 bis L3 nicht verschlossen werden und die Ventile 28.1 und 28.2 geöffnet sind. Dadurch kann zusätzlich zur weiteren Abströmöffnung 40 über die Abströmöffnungen 26.1 und 26.2 Abluftgas aus dem Gassack 12 ausströmen. Das Ventil 28.3 wird hingegen durch den Fahrzeuginsassen P1 im Lastfall L1 und L2 verschlossen, sodass über die Abströmöffnung 26.3 kein Abluftgas aus dem Gassack 12 ausströmen kann. Durch das Schließen von nur dem einem Ventil 28.3 kann der Gassackinnendruck im Vergleich zu der Rückhaltevariante V3 weiter gesenkt werden, wobei gleichzeitig noch ein ausreichend großer Gassackinnendruck für den Fahrzeuginsassen P1 im Lastfall L1 und L2 bereitgestellt werden kann.

Figur 10 zeigt die Rückhaltevariante V1, in der eine Abströmöffnung mit einer Fläche mit einem Durchmesser D4 benötigt wird. Die hierfür benötigte Fläche der Abströmöffnungen wird in der dargestellten Ausführungsform durch die weitere Abströmöffnung 40 sowie die Abströmöffnungen 26.1, 26.2 und 26.3 bereitgestellt.

Durch den Kurvenverlauf des Kanals 32.3 des Ventils 28.3 kann erreicht werden, dass auch der Kanal 32.3 durch den Fahrzeuginsassen P1 im Lastfall L3 nicht verschlossen wird und auch das Ventil 28.3 geöffnet ist.

Dadurch kann zusätzlich zur weiteren Abströmöffnung 40 über die Abströmöffnungen 26.1, 26.2 und 26.3 Abluftgas aus dem Gassack 12 ausströmen. Folglich sind in der Rückhaltevariante V1 alle Ventile 28.1 bis 28.3 geöffnet. Dadurch, dass in der Rückhaltevariante V1 alle Ventile 28.1 bis 28.3 eine geöffnete Stellung aufweisen, kann der Gassackinnendruck im Vergleich zu der Rückhaltevariante V2 nochmals gesenkt, wodurch beispielsweise ein weicheres Auftreffen für den Fahrzeuginsassen P1 im Lastfall L3 erreicht werden kann.

Allgemein ist somit eine Front-Rückhaltevorrichtung 10 zum Schutz eines auf einem Fahrzeugsitz sitzenden Fahrzeuginsassen P in einem Kraftfahrzeug geschaffen, bei der die Größe bzw. das Volumen des Gassacks 12 in einfacher und kostengünstiger Weise an die Größe des Fahrzeuginsassen P anpassbar ist. Dies gewährleistet im Allgemeinen, dass der Gassack 12 fahrzeuginsassengerecht aufgeblasen wird.

## Patentansprüche

1. Front-Rückhaltevorrichtung (10) zum Schutz eines auf einem Fahrzeugsitz sitzenden Fahrzeuginsassen (P, P1, P2) in einem Kraftfahrzeug, mit einem Gassack (12), der sich zwischen dem Fahrzeuginsassen (P, P1, P2, P3) und einem vorderen Fahrzeugbereich (14) entfaltet, insbesondere einer Fahrzeugarmatur (16) und/oder der Frontscheibe (18), wobei der Gassack (12) mehrere Abströmöffnungen (26, 26.1, 26.2, 26.3) aufweist, über die Aufblasgas aus dem Gassack (12) strömen kann, wobei jeder der Abströmöffnungen (26, 26.1, 26.2, 26.3) ein adaptives Ventil (28, 28.1, 28.2, 28.3) zugeordnet ist, das in einem dem Fahrzeuginsassen (P, P1, P2, P3) zugewandten Bereich (30) des Gassacks (12) angeordnet ist, wobei an den Abströmöffnungen (26, 26.1, 26.2, 26.3) eine als Kanal (32, 32.1, 32.2, 32.3) ausgebildete Ablenkeinrichtung (34) für das abströmende Aufblasgas vorgesehen ist, **dadurch gekennzeichnet, dass** die Kanäle (32, 32.1, 32.2, 32.3) in oberen zwei Dritteln des aufgeblasenen und dem Fahrzeuginsassen (P, P1, P2, P3) zugewandten Bereich (30) des Gassacks (12), angeordnet sind und die Positionierung der Ventile (28, 28.1, 28.2, 28.3) in Bezug auf den Gassack (12) so gewählt ist, dass das Ventil (28, 28.1, 28.2, 28.3) im Auslösefall abhängig von der Größe des Fahrzeuginsassen (P, P1, P2, P3) und einem Lastfall (L1, L2, L3) vom Kopf und/oder dem Oberkörper des Fahrzeuginsassen (P, P1, P2, P3) geschlossen werden kann, wobei abhängig von der Größe des Fahrzeuginsassen (P, P1, P2, P3) und dem vorliegenden Lastfall (L1, L2, L3) vom Kopf und/oder dem Oberkörper des Fahrzeuginsassen (P, P1, P2, P3) kein Ventil (28, 28.1, 28.2, 28.3) oder ein Ventil (28, 28.1, 28.2, 28.3) oder eine Teilmenge der Ventile (28, 28.1, 28.2, 28.3) oder alle Ventile (28, 28.1, 28.2, 28.3) geschlossen werden können.

2. Front-Rückhaltevorrichtung (10) nach einem der vorhergehenden Ansprüche, **dadurch gekennzeichnet, dass** der Gassack (12) eine Hauptkammer (24) aufweist, die mit der Abströmöffnung (26, 26.1, 26.2, 26.3) strömungsverbunden ist.

3. Front-Rückhaltevorrichtung (10) nach einem der vorhergehenden Ansprüche, **dadurch gekennzeichnet, dass** die Abströmöffnung (26, 26.1, 26.2, 26.3) in einer dem Fahrzeuginsassen (P, P1, P2, P3) zugewandten Frontwand des Gassacks (12) angeordnet ist.

4. Front-Rückhaltevorrichtung (10) nach einem der vorhergehenden Ansprüche, **dadurch gekennzeichnet, dass** die Ablenkeinrichtung (34) zumindest ein auf der Außenseite des Gassacks (12) über der Abströmöffnung (26, 26.1, 26.2, 26.3) angeordnetes Gewebestück umfasst oder einstückig mit dem, dem Fahrzeuginsassen (P, P1, P2, P3) zugewandten Bereich (30) des Gassacks (12) ausgebildet ist.

5. Front-Rückhaltevorrichtung (10) nach einem der vorhergehenden Ansprüche, **dadurch gekennzeichnet, dass** der Kanal (32, 32.1, 32.2, 32.3) im Wesentlichen in horizontaler Richtung in Bezug auf den aufgeblasenen Gassack (12) oder von der Abströmöffnung (26, 26.1, 26.2, 26,3) zu dem Kanalauslass (36, 36.1, 36.2, 36.3) in einer Kurvenbahn verläuft.

6. Front-Rückhaltevorrichtung (10) nach einem der vorhergehenden Ansprüche, **dadurch gekennzeichnet, dass** der Kanal (32, 32.1, 32.2, 32.3) gleichzeitig das adaptive Ventil (28, 28.1, 28.2, 28.3) ausbildet.

7. Front-Rückhaltevorrichtung (10) nach einem der vorhergehenden Ansprüche, **dadurch gekennzeichnet**, der Kanal (32, 32.1, 32.2, 32.3) an einer Gassackfrontwand (33) außenseitig befestigt ist, insbesondere ein aufgenähter Gewebeabschnitt (35) ist und/oder der Kanal (32, 32.1, 32.2, 32.3) im Querschnitt abschnittsweise durch die Gassackfrontwand (33) und abschnittsweise durch den Gewebeabschnitt (35) gebildet ist und/oder der Kanal (32, 32.1, 32.2, 32.3) einstückig mit der Gassackfrontwand (33), insbesondere durch ein geeignetes Webverfahren, ausgebildet ist.

8. Front-Rückhaltevorrichtung (10) nach einem der vorhergehenden Ansprüche, **dadurch gekennzeichnet, dass** über die zumindest eine Abströmöffnung (26, 26.1, 26.2, 26,3) durch das Abströmen von Aufblasgas der Gassackinnendruck des Gassacks (12) in Abhängigkeit von der Größe des Fahrzeuginsassen (P, P1, P2, P3) und des Lastfalls (L1, L2, L3) steuerbar ist.

9. Front-Rückhaltevorrichtung (10) nach einem der vorhergehenden Ansprüche, **dadurch gekennzeichnet, dass** der Gassack (12) eine weitere Abströmöffnung (40) aufweist.

10. Front-Rückhaltevorrichtung (10) nach Anspruch 9, **dadurch gekennzeichnet, dass** die weitere Abströmöffnung (40) in einem dem Fahrzeuginsassen (P, P1, P2, P3) nicht zugewandten Bereich des unteren Abschnitts des Gassacks (12) oder in einem dem Fahrzeuginsassen (P, P1, P2, P3) zugewandten Bereich (30) des Gassacks (12) angeordnet ist.

11. Front-Rückhaltevorrichtung (10) nach einem der vorhergehenden Ansprüche, **dadurch gekennzeichnet, dass** die Abströmöffnung (26) im Wesentlichen in derselben vertikalen Ebene (E) wie das der Abströmöffnung (26) zugeordnete Ventil (28) vorgesehen ist.

12. Front-Rückhaltevorrichtung (10) nach einem der vorhergehenden Ansprüche, **dadurch gekennzeichnet, dass** das Ventil (28, 28.1, 28.2, 28.3) als ein mehrstufiges Ventil ausgebildet ist, wobei insbesondere der das Ventil bildende Kanal (32, 32.1, 32.2, 32.3) sich in mehrere Teilkanäle aufteilt, die abhängig von der Größe des Fahrzeuginsassen (P, P1, P2, P3) und dem Lastfall (L1, L2, L3) vom Kopf und/oder dem Oberkörper des Fahrzeuginsassen (P, P1, P2, P3) geschlossen werden können.-

## Claims

1. A front restraint device (10) for protecting a vehicle occupant (P, P1, P2) sitting on a vehicle seat in a motor vehicle, comprising an airbag (12) which is deployed between the vehicle occupant (P, P1, P2, P3) and a front vehicle region (14), especially a vehicle instrument panel (16) and/or the windscreen (18), wherein the airbag (12) has plural outflow openings (26, 26.1, 26.2, 26.3) via which inflation gas may flow out of the airbag (12), wherein an adaptive valve (28, 28.1, 28.2, 28.3) which is arranged in a region (30) of the airbag (12) that faces the vehicle occupant (P, P1, P2, P3) is assigned to each of the outflow openings (26, 26.1, 26.2, 26.3), wherein at the outflow openings (26, 26.1, 26.2, 26.3) a deflecting unit (34) configured as a passage (32, 32.1, 32.2, 32.3) for the outflowing inflation gas is provided, **characterized in that** the passages (32, 32.1, 32.2, 32.3) are arranged in the upper two thirds of the region (30) of the inflated airbag (12) which faces the vehicle occupant (P, P1, P2, P3) and the positioning of the valves (28, 28.1, 28.2, 28.3) with respect to the airbag (12) is selected in such a manner that, in the event of triggering, the valve (28, 28.1, 28.2, 28.3) can be closed depending on height of the vehicle occupant (P, P1, P2, P3) and a load situation (L1, L2, L3) from the head and/or the upper body of the vehicle occupant (P, P1, P2, P3), wherein depending on the height of the vehicle occupant (P, P1, P2, P3) and the given load situation (L1, L2, L3) no valve (28, 28.1, 28.2, 28.3), or one valve (28, 28.1, 28.2, 28.3) or a partial quantity of the valves (28, 28.1, 28.2, 28.3) or all valves (28, 28.1, 28.2, 28.3) can be closed by the head and/or the upper body of the vehicle occupant (P, P1, P2, P3).

2. The front restraint device (10) according to any one of the preceding claims, **characterized in that** the airbag (12) has a main chamber (24) which is in fluid communication with the outflow opening (26, 26.1, 26.2, 26.3).

3. The front restraint device (10) according to any one of the preceding claims, **characterized in that** the outflow openings (26, 26.1, 26.2, 26.3) are arranged in a front panel of the airbag (12) that faces the vehicle occupant (P, P1, P2, P3).

4. The front restraint device (10) according to any one of the preceding claims, **characterized in that** the deflecting unit (34) comprises at least one fabric piece disposed on the outside of the airbag (12) above the outflow opening (26, 26.1, 26.2, 26.3) or is formed integrally with the region (30) of the airbag (12) that faces the vehicle occupant (P, P1, P2, P3).

5. The front restraint device (10) according to any one of the preceding claims, **characterized in that** the passage (32, 32.1, 32.2, 32.3) extends substantially in the horizontal direction with respect to the inflated airbag (12) or from the outflow opening (26, 26.1, 26.2, 26,3) to the passage outlet (36, 36.1, 36.2, 36.3) in a curved path.

6. The front restraint device (10) according to any one of the preceding claims, **characterized in that** the passage (32, 32.1, 32.2, 32.3) at the same time forms the adaptive valve (28, 28.1, 28.2, 28.3).

7. The front restraint device (10) according to any one of the preceding claims, **characterized in that** the passage (32, 32.1, 32.2, 32.3) is fastened to the outside of an airbag front panel (33), in particular is an attached fabric portion (35) and/or the passage (32, 32.1, 32.2, 32.3) in cross-section is formed in portions by the airbag front panel (33) and in portions by the fabric portion (35) and/or the passage (32, 32.1, 32.2, 32.3) is formed integrally with the airbag front panel (33), in particular by an appropriate weaving method.

8. The front restraint device (10) according to any one of the preceding claims, **characterized in that** via the at least one outflow opening (26, 26.1, 26.2, 26,3) the internal airbag pressure of the airbag (12) can be controlled by the outflow of inflation gas depending on the height of the vehicle occupant (P, P1, P2, P3) and on the load situation (L1, L2, L3).

9. The front restraint device (10) according to any one of the preceding claims, **characterized in that** the airbag (12) has another outflow opening (40).

10. The front restraint device (10) according to claim 9, **characterized in that** the further outflow opening (40) is arranged in a region of the lower portion of the airbag (12) which does not face the vehicle occupant (P, P1, P2, P3) or in a region (30) of the airbag (12) which faces the vehicle occupant (P, P1, P2, P3).

11. The front restraint device (10) according to any one of the preceding claims, **characterized in that** the outflow opening (26) is provided substantially in the same vertical plane (E) as the valve (28) assigned to the outflow opening (26).

12. The front restraint device (10) according to any one of the preceding claims, **characterized in that** the valve (28, 28.1, 28.2, 28.3) is in the form of a multi-stage valve, wherein especially the passage (32, 32.1, 32.2, 32.3) forming the valve is split into plural sub-passages which can be closed depending on the height of the vehicle occupant (P, P1, P2, P3) and the load situation (L1, L2, L3) by the head and/or the upper body of the vehicle occupant (P, P1, P2, P3).

## Revendications

1. Dispositif de retenue avant (10) pour protéger un passager (P, P1, P2) assis sur un siège de véhicule dans un véhicule automobile, lequel comprend un coussin gonflable (12) qui se déploie entre le passager (P, P1, P2, P3) et une zone avant (14) du véhicule, en particulier une armature de véhicule (16) et/ou le pare-brise (18), pour lequel le coussin gonflable (12) comporte plusieurs orifices d'écoulement (26, 26.1, 26.2, 26.3) par lesquels le gaz de gonflage peut s'écouler hors du coussin gonflable (12), pour lequel une soupape adaptative (28, 28.1, 28.2, 28.3) est associée à chacun des orifices d'écoulement (26, 26.1, 26.2, 26.3), laquelle est disposée dans une zone (30) du coussin gonflable (12) tournée vers le passager (P, P1, P2, P3) du véhicule, pour lequel un dispositif de déviation (34) réalisé sous la forme d'un canal (32, 32.1, 32.2, 32.3) est prévu sur les orifices d'écoulement (26, 26.1, 26.2, 26.3) pour le gaz de gonflage s'écoulant vers l'extérieur, **caractérisé en ce que** les canaux (32, 32.1, 32.2, 32.3) sont disposés dans les deux tiers supérieurs de la zone (30) du coussin gonflable (12) qui est gonflée et tournée vers le passager (P, P1, P2, P3) du véhicule, et le positionnement des soupapes (28, 28.1, 28.2, 28.3) par rapport au coussin gonflable (12) est choisi de telle sorte que la soupape (28, 28.1, 28.2, 28.3) peut être fermée en cas de déclenchement en fonction de la taille de l'occupant du véhicule (P, P1, P2, P3) et d'un cas de charge (L1, L2, L3) de la tête et/ou du torse de l'occupant du véhicule (P, P1, P2, P3), pour lequel en fonction de la taille de l'occupant du véhicule (P, P1, P2, P3) et du cas de charge (L1, L2, L3) de la tête et/ou du torse de l'occupant du véhicule (P, P1, P2, P3), aucune soupape (28, 28.1, 28.2, 28.3) n'est actionnée, ou une soupape (28, 28.1, 28.2, 28.3) ou un sous-ensemble des soupapes (28, 28.1, 28.2, 28.3) ou toutes les soupapes (28, 28.1, 28.2, 28.3) peuvent être fermées.

2. Dispositif de retenue avant (10) selon l'une des revendications précédentes, **caractérisé en ce que** le coussin gonflable (12) présente une chambre principale (24), laquelle est en liaison d'écoulement avec les orifices d'écoulement (26, 26.1, 26.2, 26.3).

3. Dispositif de retenue avant (10) selon l'une des revendications précédentes, **caractérisé en ce que** l'orifice d'écoulement (26, 26.1, 26.2, 26.3) est disposé sur une paroi avant du coussin gonflable (12) tournée vers le passager du véhicule (P, P1, P2, P3).

4. Dispositif de retenue avant (10) selon l'une des revendications précédentes, **caractérisé en ce que** le dispositif de déviation (34) comprend au moins une pièce de tissu disposée sur le côté extérieur du coussin gonflable (12) au-dessus de l'orifice d'écoulement (26, 26.1, 26.2, 26.3) ou est réalisé d'un seul tenant avec la zone (30) du coussin gonflable (12) tournée vers le passager du véhicule (P, P1, P2, P3).

5. Dispositif de retenue avant (10) selon l'une des revendications précédentes, **caractérisé en ce que** le canal (32, 32.1, 32.2, 32.3) s'étend sensiblement en direction horizontale par rapport au coussin gonflable (12) gonflé ou s'étend selon une trajectoire courbe de l'orifice d'écoulement (26, 26.1, 26.2, 26,3) vers la sortie du canal (36, 36.1, 36.2, 36.3).

6. Dispositif de retenue avant (10) selon l'une des revendications précédentes, **caractérisé en ce que** le canal (32, 32.1, 32.2, 32.3) forme simultanément la soupape adaptative (28, 28.1, 28.2, 28.3)

7. Dispositif de retenue avant (10) selon l'une des revendications précédentes, **caractérisé en ce que** le canal (32, 32.1, 32.2, 32.3) est fixé côté extérieur sur une paroi frontale (33) du coussin gonflable (33), en particulier est une section de tissu (35) cousue et/ou le canal (32, 32.1, 32.2, 32. 3) est formé en section transversale, par endroits, par la paroi frontale (33) du coussin gonflable et, localement par la section de tissu (35) et/ou le canal (32, 32.1, 32.2, 32.3) est formé d'une seule pièce avec la paroi frontale (33) du coussin gonflable, en particulier par un procédé de tissage approprié.

8. Dispositif de retenue avant (10) selon l'une des revendications précédentes, **caractérisé en ce que**, par l'intermédiaire d'au moins un orifice d'écoulement (26, 26.1, 26.2, 26, 3), la pression interne du coussin gonflable (12) peut être commandée par l'évacuation du gaz de gonflage en fonction de la taille de l'occupant du véhicule (P, P1, P2, P3) et du cas de charge (L1, L2, L3).

9. Dispositif de retenue avant (10) selon l'une des revendications précédentes, **caractérisé en ce que** le coussin gonflable (12) présente un autre orifice d'écoulement (40).

10. Dispositif de retenue avant (10) selon la revendication 9, **caractérisé en ce que** l'autre orifice d'écoulement (40) est disposé dans une zone de la section inférieure du coussin gonflable (12) qui n'est pas tournée vers l'occupant du véhicule (P, P1, P2, P3) ou dans une zone (30) du coussin gonflable (12) qui est tournée vers l'occupant du véhicule (P, P1, P2, P3).

11. Dispositif de retenue avant (10) selon l'une quelconque des revendications précédentes, **caractérisé en ce que** l'orifice d'écoulement (26) est prévu sensiblement dans le même plan vertical (E) que la soupape (28) associée à l'orifice d'écoulement (26).

12. Dispositif de retenue avant (10) selon l'une des revendications précédentes, **caractérisé en ce que** la soupape (28, 28.1, 28.2, 28.3) est conçue comme une soupape à plusieurs étages, pour lequel le canal (32, 32.1, 32.2, 32.3) formant la soupape est notamment divisé en plusieurs parties (32, 1, 32.2, 32.3) se divise en plusieurs canaux partiels, lesquels peuvent être fermés en fonction de la taille de l'occupant du véhicule (P, P1, P2, P3) et du cas de charge (L1, L2, L3) de la tête et/ou du torse de l'occupant du véhicule (P, P1, P2, P3).
